# EUROPEAN PATENT APPLICATION

(11) **EP 2 484 892 A2**
(43) Date of publication of application: **08.08.2012**
(21) Application number: 12152805.3
(22) Date of filing: 27.01.2012
(51) Int. Cl.: F03D 1/00, F03D 11/00

(54) **Method for wind turbine inspection**

(30) Priority: 04.02.2011 US 201113021056
(71) Applicant: General Electric Company, Schenectady, NY 12345 (US)
(72) Inventor: Murphy, John Thomas, Schenectady, NY New York 12345 (US); Mishra, Debasish, 560066 Bangalore (IN); Silliman, George Rowan, Schenectady, NY New York 12345 (US); Kumar, Vinod Padmanabhan, 560066 Bangalore (IN); Mandayam, ShyamsunderTondanur, 560066 Bangalore (IN); Sharma, Prafull, 560066 Bangalore (IN)
(74) Representative: Bedford, Grant Richard

(57) **Abstract**

A method and system for inspecting a wind turbine (100) is provided. The method includes providing at least one remotely operated aerial platform (ROAP) (310), providing at least one non-destructive evaluation (NDE) device (320) attached to the ROAP, and providing at least one distance measuring system attached to the ROAP. The distance measuring system is used for determining the distance between the ROAP and at least a portion of the wind turbine. The method also includes positioning the ROAP so that the at least one non-destructive evaluation device captures data used for inspecting the wind turbine.

## Description

The invention described herein relates generally to a method and system for inspecting a wind turbine. More specifically, the invention relates to a method and system employing a remotely operated aerial platform for inspecting a wind turbine.

Wind turbines need to be inspected on a regular basis to keep them operating reliably and effectively. However, damage invariably occurs to the wind turbine either from external effects (e.g., lightning, wind, rain, hail, etc.) or from general wear and tear leading to fatigue of various components.

The outside of the tower is difficult to inspect, and large cranes are often needed to provide access for close inspection of the various components, such as the blades. A technician can manually climb the tower and rappel down, but this is a time consuming, labor intensive and hazardous activity. The inside of the wind turbine also needs to be inspected, and a technician must climb the tower and enter the nacelle. This is also a time consuming and labor intensive activity. In addition, there are often limits placed on the number of climbs any one technician can perform per day. This can be particularly problematic when a wind farm has a large number of wind turbines, and each wind turbine needs to be inspected. Further, wind turbines typically must be shut down when personnel are inside the wind turbine, and this reduces the production capability of the wind turbine currently undergoing an inspection.

Inspection of offshore wind turbines is also challenging mainly due to accessibility of the turbine. Offshore wind turbines can be subjected to a harsher operation environment and regular inspection is important for maintaining the availability and health of the wind turbine.

In an aspect of the present invention, a method is provided for inspecting a wind turbine. The method includes the steps of providing at least one remotely operated aerial platform (ROAP), providing at least one non-destructive evaluation (NDE) device attached to the remotely operated aerial platform, and providing at least one distance measuring system attached to the remotely operated aerial platform. The distance measuring system is used for determining the distance between the remotely operated aerial platform and at least a portion of the wind turbine. The method also includes positioning the at least one remotely operated aerial platform so that the non-destructive evaluation device captures data used for inspecting the wind turbine.

In another aspect of the present invention, a system is provided for inspecting a wind turbine. The system includes at least one remotely operated aerial platform (ROAP), at least one non-destructive evaluation (NDE) device attached to the remotely operated aerial platform, and at least one distance measuring system attached to the remotely operated aerial platform. The distance measuring system is used for determining the distance between the remotely operated aerial platform and at least a portion of the wind turbine. The remotely operated aerial platform is positioned so that the non-destructive evaluation device captures data used for inspecting the wind turbine.

Various aspects and embodiments of the present invention will now be described in connection with the accompanying drawings in which:
FIG. 1 is a partial side elevational illustration of a wind turbine;
FIG. 2 is a partial perspective illustration of the interior of the nacelle of the wind turbine of FIG. 1;
FIG. 3 illustrates a perspective view of a remotely operated aerial platform (ROAP) that is used to inspect the wind turbine of FIGs. 1 and 2, according to an aspect of the present invention;
FIG. 4 illustrates a side elevational view of a remotely operated aerial platform (ROAP) that is used to inspect the wind turbine of FIGs. 1 and 2, according to an aspect of the present invention;
FIG. 5 illustrates a side elevational view of a wind turbine and remotely operated aerial platforms used to inspect the wind turbine, according to an aspect of the present invention;
FIG. 6 illustrates a schematic view of a remotely operated aerial platform (ROAP) mounted on a charging dock, according to an aspect of the present invention;
FIG. 7 illustrates a schematic view of an array of remotely operated aerial platforms (ROAPs) mounted on a charging dock, according to an aspect of the present invention; and
FIG. 8 illustrates a schematic view of a remotely operated aerial platform (ROAP), according to an aspect of the present invention.

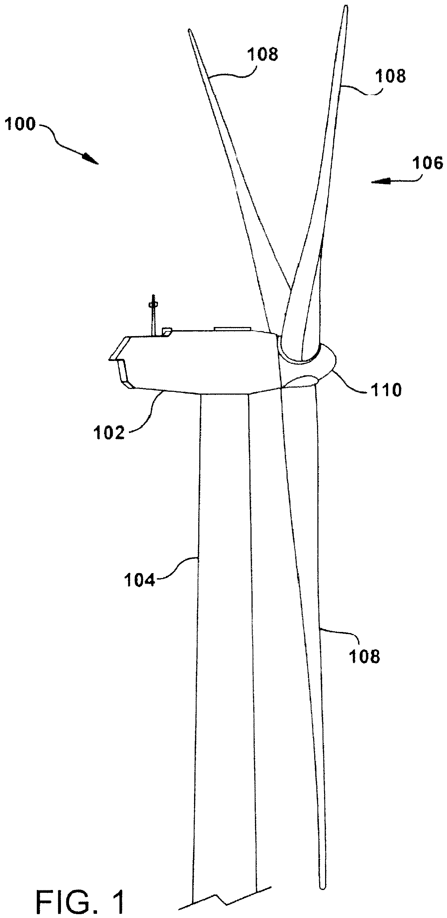

In some configurations and referring to FIG. 1, a wind turbine 100 comprises a nacelle 102 housing a generator (not shown in FIG. 1). Nacelle 102 is mounted atop a tall tower 104, only a portion of which is shown in FIG. 1. Wind turbine 100 also comprises a rotor 106 that includes one or more rotor blades 108 attached to a rotating hub 110. Although wind turbine 100 illustrated in FIG. 1 includes three rotor blades 108, there are no specific limits on the number of rotor blades 108 required by embodiments of the present invention.

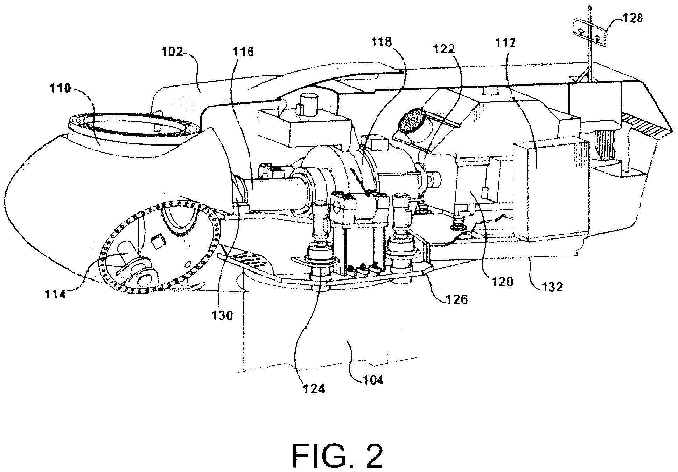

Referring to FIG. 2, various components are housed in nacelle 102 or in tower 104 of wind turbine 100. The height of tower 104 is selected based upon factors and conditions known in the art. In some configurations, one or more microcontrollers within control panel 112 comprise a control system used for overall system monitoring and control. Alternative distributed or centralized control architectures are used in some configurations. A variable blade pitch drive 114 may be provided to control the pitch of blades 108 (not shown in FIG. 2) that drive hub 110 as a result of wind. The pitch angles of blades 108 may be individually controlled by blade pitch drive 114. Hub 110 and blades 108 together comprise wind turbine rotor 106.

The drive train of the wind turbine includes a main rotor shaft 116 (also referred to as a "low speed shaft") connected to hub 110 via main bearing 130 and (in some configurations), at an opposite end of shaft 116 to a gear box 118. Gearbox 118 drives a high-speed shaft of generator 120. In other configurations, main rotor shaft 116 is coupled directly to generator 120. The high-speed shaft (not identified in FIG. 2) is used to drive generator 120, which is mounted on mainframe 132. In some configurations, rotor torque is transmitted via coupling 122. In some configurations of the present invention, generator 120 is a direct drive permanent magnet generator. Yaw drive 124 and yaw deck 126 provide a yaw orientation system for wind turbine 100. A meteorological boom 128 provides information for a turbine control system, which may include wind direction and/or wind speed. In some configurations, the yaw system is mounted on a flange provided atop tower 104.

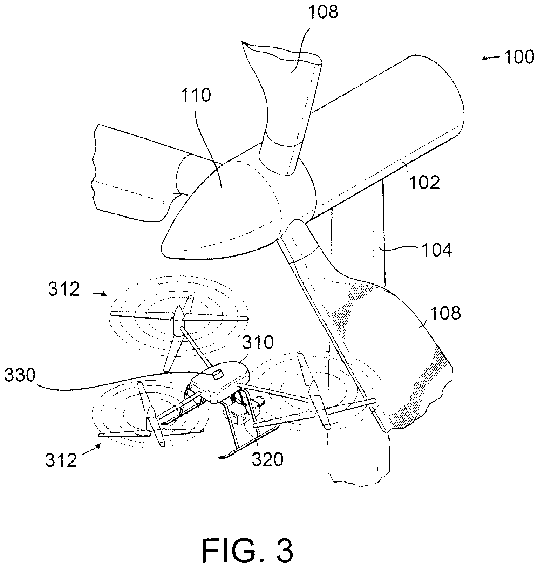

FIG. 3 illustrates a perspective view of a remotely operated aerial platform (ROAP) 310 that is used to inspect a wind turbine, according to an aspect of the present invention. The ROAP 310 may include one or more rotor blades 312 for propulsion, a non-destructive evaluation (NDE) device 320, repair/cleaning devices (not shown in FIG. 3) and at least one distance measuring system or device 330. The ROAP 310 can be flown around or within the wind turbine 100 to perform an inspection. In other applications of the present invention, an unmanned aerial vehicle (UAV) could also be used as the ROAP device.

The ROAP 310 can take the form of a helicopter or blimp, or any other device capable of flight or sufficient maneuverability. A helicopter may have one or more main rotors, and may also include one or more tail rotors as well. Main rotors are typically oriented in one or more substantially horizontal planes and the tail rotor is typically oriented in a substantially vertical plane. However, helicopters with one or more main rotors may or may not have a tail rotor, as the main rotors can be used to change the direction of flight and/or spatial orientation. Additionally, the ROAP can be equipped with a Global Positioning System (global as well as local GPS) and flight control system to control the ROAP manually or autonomously, and/or to program the ROAP to follow a predefmed flight trajectory while performing inspection or repair tasks. The ROAP can transmit the inspection data to a ground station or remote operator wirelessly. The ROAP can carry other accessories like a light source to enhance image retrieval, a laser pointer to create a bright contrast spot on the blade surface so that the lens of the camera can focus with this spot as a reference.

The non-destructive evaluation (NDE) device 320 can comprise a visual camera, an infrared camera, an acoustic transmitter, an acoustic receiver, a radiation source, and a radiation detector, or any other suitable evaluation device as desired in the specific application. Additional NDE devices can also be of the ultrasonic, radiographic, thermographic, and electromagnetic types. A camera can be used to acquire images of possible defects or damage, such as cracks, delaminations, discolorations, oil spillages or hot-spots. Acoustic receivers can be used to detect undesirable noises or vibrations. Radiation devices can be used to detect other damage.

The distance measuring system or device 330 can comprise contact type collision detectors, electromagnetic transceivers, acoustic transceivers, laser transceivers, radar transceivers, visually based receivers, and RFID tag transceivers. RFID tags can be located at various positions on and within the wind turbine 100. These RFID tags can be used to help determine the specific location of the remotely operated aerial platform 310.

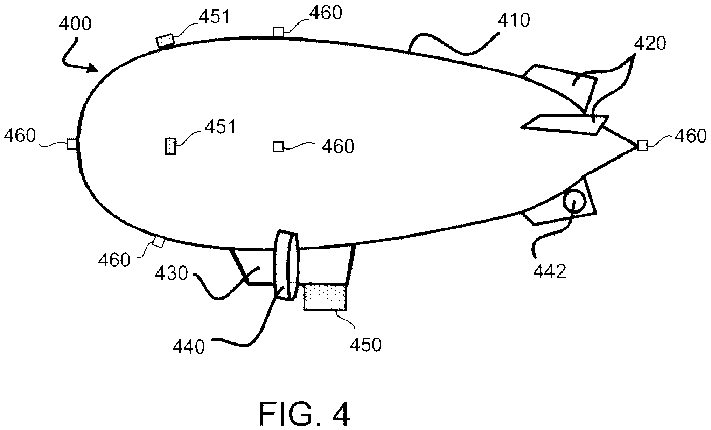

FIG. 4 illustrates a side elevational view of a remotely operated aerial platform taking the form of a blimp 400, according to an aspect of the present invention. The blimp 400 includes a chamber 410 such as a balloon, dirigible, blimp or other lighter-than-air device. A method for generating lift with such devices is accomplished with gases having a lesser density than an ambient atmosphere, by heating ambient air, or by other suitable methods. Coupled to the chamber 410 are a number of fins 420 which may include control surfaces for steering the blimp 400 in pitch or yaw. Also coupled with the chamber 410 is a control housing 430 that may include control devices suitable to receive and process the signal received (or generated) for controlling operation of the blimp 400. The housing 430 supports one or more thrust devices 440. The thrust devices 440 may be gimbaled to provide lift and/or thrust. The chamber 410 provides lift as previously described, thus, the thrust devices 440 are configured to provide supplemental lift to assist in holding payload aloft and/or for controlling vertical positioning of the blimp 400. In addition, a steering thrust device 442 may be included to provide another control mechanism and to assist in "pointing" the blimp in the desired direction.

Coupled to the blimp 400 is at least one non-destructive evaluation (NDE) device 450 and one or more distance measuring devices 460, which may be part of a distance measuring system. As described in conjunction with the helicopter-type ROAP, the NDE device 450 can comprise a visual camera, an infrared camera, an acoustic transmitter, an acoustic receiver, a radiation source, a radiation detector, an ultrasonic device, a radiographic device, a thermographic device, and an electromagnetic device or any other suitable evaluation device as desired in the specific application. Additional NDE devices 451 may also be distributed at various locations on chamber 410 or on blimp 400. The distance measuring devices may include contact type collision detectors, electromagnetic transceivers, acoustic transceivers, laser transceivers, radar transceivers, visually based receivers, and RFID tag transceivers.

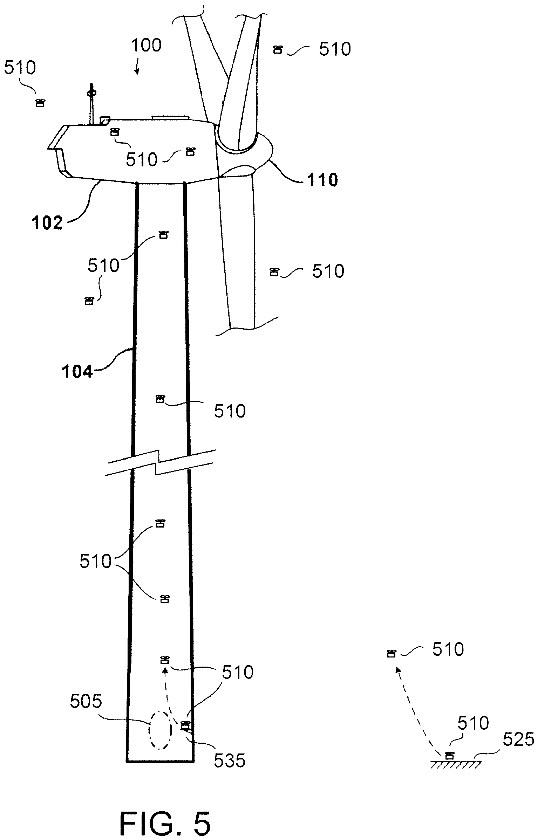

FIG. 5 illustrates a side elevational view, partly in cross-section of a method and system for inspecting wind turbines, according to an aspect of the present invention. Remotely operated aerial platform (ROAP) 510 can be flown around the exterior and/or interior of the wind turbine 100. In one aspect, the ROAP 510 can be flown from an exterior location 525 with respect to wind turbine 100. A human operator (not shown) or an autonomous program can be used to navigate the ROAP 510 to and around the wind turbine 100. During an inspection process a variety of images, sounds or other data may be captured by NDE device(s) on ROAP 510. The captured data may be stored locally within the ROAP 510 and/or transmitted to a remote location external to the ROAP 510.

The ROAP 510 may also be used to inspect the interior of the wind turbine 100. For an internal inspection, the ROAP can either originate from a location 535 within the wind turbine, or the ROAP may start its flight outside the wind turbine and then enter through the door 505 or any number of vents (not shown) or access hatches (not shown) located in various locations in wind turbine 100.

In one example, the ROAP 510 starts its flight at location 535 within the tower 104. The ROAP can fly up the tower 104 and enter the nacelle. In the nacelle, the ROAP 510 can inspect any of a number of components, including but not limited to, the generator, the gearbox, bearings, and high or low speed shafts. The ROAP 510 could also enter the hub 110 either from within the nacelle 102 or from an external hatch (not shown) located on hub 110.

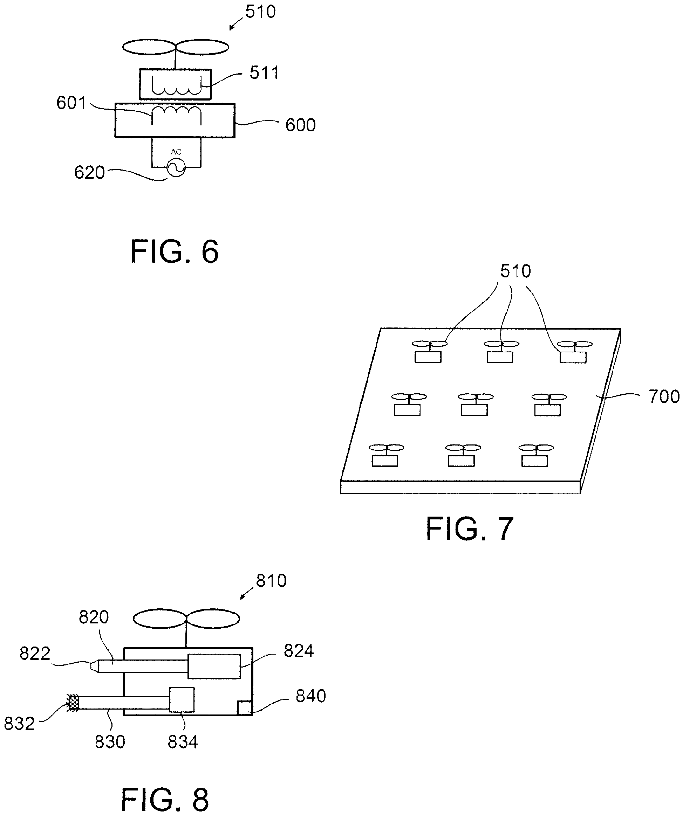

FIG. 6 illustrates a schematic view of a remotely operated aerial platform 510 docked on a charging dock 600. The charging dock 600 can include one or more inductive coils 601 coupled to a power supply 620. Power supply 620 is shown as an alternating current (AC) source, but a direct current (DC) source could be used as well. The ROAP 510 can be recharged while located on dock 600.

FIG. 7 illustrates a schematic view of an array of remotely operated aerial platforms 510 docked on a charging dock 700. The charging dock 700 is similar to the dock 600, but includes multiple inductive coils (not shown) or an array of inductive coils (not shown) coupled to a power supply (not shown). The multiple ROAP charging dock 700 can be used to charge multiple ROAPs for inspecting one or multiple turbines.

As one example, the multiple ROAP charging dock 700 could be housed within wind turbine 100 and used to charge multiple ROAPs 510. The multiple ROAPs could be pre-programmed to inspect specific locations or components within the wind turbine. For example, a first ROAP could be sent on a path that inspects the tower 104, a second ROAP could be sent on a path to inspect the interior of nacelle 102 or components housed therein, and a third ROAP could be programmed to fly outside the wind turbine and inspect the blades. The multiple ROAPs could also be controlled remotely by a human operator or by a programmable computer.

For remote wind turbines located off-shore or in hard to reach land based environments, the array of ROAPs combined with the multiple ROAP charging dock 700, or a single ROAP with a single ROAP charging dock 600 can greatly facilitate wind turbine inspections. It is difficult for stationary cameras to capture every possible region of interest, so the mobile ROAPs provide a greatly improved mobile vehicle for inspections. Offshore turbines can be inspected when desired and the ROAPs can be recharged during non-inspection time or staggered in use so that while a first group of ROAPs are being used, a second group of ROAPs are charging.

A mobile vehicle (e.g., a van or truck) can also use the multiple ROAP charging dock 700 to charge multiple ROAPs. While one or more ROAPs are out on inspection, other ROAPs can be charging. This will greatly reduce downtime during the inspection process. The ROAP can also be configured to utilize replaceable power sources, such as batteries or fuel cells, and solar panels (not shown) may be incorporated into the ROAP to extend flying time or to assist in recharging.

The ROAPs can also be equipped with wired or wireless transmission capability for receiving commands or programming, and for transmitting captured data. The ROAPs 510 can include USB connections or wireless links such as WIFI, Bluetooth® (a registered trademark of Bluetooth SIG), infrared devices or any other suitable wireless link. Complementary receivers and/or transmitters can be incorporated in the charging docks 600, 700 or in suitable electronics (e.g., computers, laptops, etc.) located within range of the ROAPs.

FIG. 8 illustrates a schematic view of a remotely operated aerial platform 810 having a cleaning apparatus and repair apparatus. The cleaning apparatus 820 may be comprised of a main tube member having a nozzle 822, and may be attached to the ROAP 810. A source 824 of a cleaning agent is connected to the main tube member. The source 824 can provide compressed air, water, abrasive material, grinding material or any other suitable fluids. Compressed air can be stored in a suitable receptacle attached to ROAP 810 and then discharged through nozzle 822 to blow off or dislodge debris or unwanted material on various components of the wind turbine. Water, water mixtures (e.g., including anti-freeze, etc.), cleaning fluids or surfactants may be used to wash off debris or unwanted material on various components of the wind turbine. Abrasive material (e.g., sand, glass bead, baking soda blast media, aluminum oxide, walnut shells, etc.) can be used to knock off or dislodge debris or unwanted material on various components of the wind turbine. Grinding material (e.g., sanding disks/heads, cut off wheels, etc.) can also be used to remove unwanted material as well.

A repair apparatus 830 may also be attached to the ROAP 810. The repair apparatus 830 may comprise a main tube having a repair head 832. The repair head can include a stationary, rotating or telescoping member that uses an abrasive or grinding material. Abrasive material (e.g., sand, glass bead, baking soda blast media, aluminum oxide, walnut shells, etc.) can be used to knock off or dislodge debris or unwanted material or for preparing surfaces for subsequent repair layers. Grinding material (e.g., sanding disks/heads, cut off wheels, etc.) can also be used to remove unwanted material, as well as, for preparing surfaces for subsequent repair layers. The head 832 can also be used for the application of paint, adhesives and/or sealing material to the desired areas under repair. A motor or supply apparatus 834 can be used to power the head 832 or supply the head 832 with the desired material. In addition, both main tubes in the cleaning and repair apparatus may be comprised of telescoping members that can be used to extend or retract the nozzle 822 and head 832.

A global positioning receiver 840 can be attached to the ROAP 810, and the receiver 840 can be used to determine the relative location of the ROAP 810. The receiver 840 can also be used to navigate and/or maintain position of the ROAP 810 during flight. The global positioning receiver 840 may also be configured to transmit data back to a remote control unit, and this data can be used for navigation, positioning and inspection purposes.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for inspecting a wind turbine comprising:
   providing at least one remotely operated aerial platform (ROAP);
   providing at least one non-destructive evaluation (NDE) device attached to the at least one remotely operated aerial platform;
   providing at least one distance measuring system attached to the at least one remotely operated aerial platform, the distance measuring system for determining the distance between the at least one remotely operated aerial platform and at least a portion of the wind turbine;
   positioning the at least one remotely operated aerial platform so that the at least one non-destructive evaluation device captures data used for inspecting the wind turbine.
2. The method of clause 1, further comprising:
   inspecting an exterior of the wind turbine.
3. The method of any preceding clause, further comprising:
   inspecting an interior of the wind turbine.
4. The method of any preceding clause, wherein the step of inspecting the interior further comprises at least one of:
   inspecting an interior of a tower, and inspecting an interior of a nacelle.
5. The method of any preceding clause, wherein the step of providing at least one remotely operated aerial platform further comprises:
   providing at least one of a helicopter, and a blimp.
6. The method of any preceding clause, wherein the step of providing at least one non-destructive evaluation device further comprises:
   providing at least one of a visual camera, an infrared camera, an acoustic transmitter, an acoustic receiver, a radiation source, a radiation detector, an ultrasonic device, a radiographic device, a thermographic device, and an electromagnetic device.
7. The method of any preceding clause, wherein the step of providing at least one distance measuring system further comprises:
   providing at least one of contact type collision detectors, electromagnetic transceivers, acoustic transceivers, laser transceivers, radar transceivers, visually based receivers, and RFID tag transceivers.
8. The method of any preceding clause, wherein the step of positioning the at least one remotely operated aerial platform further comprises:
   navigating the at least one remotely operated aerial platform within the interior of the wind turbine, where the navigating is performed substantially by a remote operator.
9. The method of any preceding clause, wherein the step of positioning the at least one remotely operated aerial platform further comprises:
   navigating the at least one remotely operated aerial platform within the interior of the wind turbine, where the navigating is performed substantially on a pre-programmed autonomous path.
10. The method of any preceding clause, further comprising:
   providing a recharging station for the at least one remotely operated aerial platform within the wind turbine;
   wherein the at least one remotely operated aerial platform returns to the recharging station to be recharged.
11. The method of any preceding clause, further comprising:
   providing an inductive charging system in the recharging station; and
   providing an inductive charging receiver in the at least one remotely operated aerial platform.
12. The method of any preceding clause, wherein the step of providing at least one remotely operated aerial platform further comprises:
   providing multiple remotely operated aerial platforms;
   wherein each of the multiple remotely operated aerial platforms can be either remotely controlled by a human operator or controlled to navigate on a pre-programmed autonomous path to a specific area of interest.
13. The method of any preceding clause, further comprising:
   providing at least one cleaning apparatus attached to the at least one remotely operated aerial platform; and
   wherein the at least one cleaning apparatus utilizes at least one of compressed air, water, fluid, abrasive material, and grinding material.
14. The method of any preceding clause, further comprising:
   providing at least one repair apparatus attached to the at least one remotely operated aerial platform; and
   wherein the at least one repair apparatus utilizes at least one of abrasive material, grinding material, paint, adhesive, and sealing material.
15. The method of any preceding clause, further comprising:
   providing a global positioning receiver to determine the relative location of the at least one remotely operated aerial platform;
   wherein, the global positioning receiver is used to navigate the at least one remotely operated aerial platform and/or maintain position of the at least one remotely operated aerial platform during flight.
16. A system for inspecting a wind turbine comprising:
   at least one remotely operated aerial platform (ROAP);
   at least one non-destructive evaluation (NDE) device attached to the at least one remotely operated aerial platform;
   at least one distance measuring system attached to the at least one remotely operated aerial platform, the distance measuring system for determining the distance between the at least one remotely operated aerial platform and at least a portion of the wind turbine;
   wherein the at least one remotely operated aerial platform is positioned so that the at least one non-destructive evaluation device captures data used for inspecting the wind turbine.
17. The system of any preceding clause, wherein at least one of an exterior and interior of the wind turbine is inspected.
18. The system of any preceding clause, wherein an interior inspection further comprises inspecting, at least one of, an interior of a tower, and an interior of a nacelle.
19. The system of any preceding clause, wherein the at least one remotely operated aerial platform further comprises at least one of a helicopter, and a blimp.
20. The system of any preceding clause, wherein the at least one non-destructive evaluation device further comprises, at least one of, a visual camera, an infrared camera, an acoustic transmitter, an acoustic receiver, a radiation source, a radiation detector, an ultrasonic device, a radiographic device, a thermographic device, and an electromagnetic device.
21. The system of any preceding clause, wherein the at least one distance measuring system further comprises, at least one of, contact type collision detectors, electromagnetic transceivers, acoustic transceivers, laser transceivers, radar transceivers, visually based receivers, and RFID tag transceivers.
22. The system of any preceding clause, wherein the at least one remotely operated aerial platform is navigated within the interior of the wind turbine, and wherein navigating is performed substantially by a remote operator or substantially by following a pre-programmed autonomous path.
23. The system of any preceding clause, further comprising:
   a recharging station for recharging the at least one remotely operated aerial platform within the wind turbine;
   wherein the at least one remotely operated aerial platform returns to the recharging station to be recharged.
24. The system of any preceding clause, further comprising:
   an inductive charging system in the recharging station; and
   an inductive charging receiver in the at least one remotely operated aerial platform.
25. The system of any preceding clause, further comprising:
   a plurality of remotely operated aerial platforms;
   wherein each of the plurality of remotely operated aerial platforms is either remotely controlled by a human operator or controlled to navigate on a pre-programmed autonomous path to a specific area of interest.
26. The system of any preceding clause, further comprising:
   at least one cleaning apparatus attached to the at least one remotely operated aerial platform; and
   wherein the at least one cleaning apparatus utilizes at least one of compressed air, water, fluid, abrasive material, and grinding material.
27. The system of any preceding clause, further comprising:
   at least one repair apparatus attached to the at least one remotely operated aerial platform; and
   wherein the at least one repair apparatus utilizes at least one of abrasive material, grinding material, paint, adhesive, and sealing material.
28. The system of any preceding clause, further comprising:
   a global positioning receiver attached to the at least one remotely operated aerial platform, the global positioning receiver used to determine the relative location of the at least one remotely operated aerial platform;
   wherein, the global positioning receiver is used to navigate the at least one remotely operated aerial platform and/or maintain position of the at least one remotely operated aerial platform during flight.

## Claims

1. A method for inspecting a wind turbine (100) comprising:
providing at least one remotely operated aerial platform (ROAP) (310);
providing at least one non-destructive evaluation (NDE) device (320) attached to the at least one remotely operated aerial platform;
providing at least one distance measuring system (330) attached to the at least one remotely operated aerial platform, the distance measuring system for determining the distance between the at least one remotely operated aerial platform and at least a portion of the wind turbine;
positioning the at least one remotely operated aerial platform (310) so that the at least one non-destructive evaluation device (320) captures data used for inspecting the wind turbine (100).

2. The method of claim 1, further comprising: inspecting an exterior of the wind turbine (100).

3. The method of claim 1, further comprising: inspecting an interior of the wind turbine (100).

4. The method of claim 3, wherein the step of inspecting the interior further comprises at least one of: inspecting an interior of a tower (104), and inspecting an interior of a nacelle (102).

5. The method of any preceding claim, wherein the step of providing at least one remotely operated aerial platform (310) further comprises: providing at least one of a helicopter, and a blimp.

6. The method of any preceding claim, wherein the step of providing at least one non-destructive evaluation device (320) further comprises: providing at least one of a visual camera, an infrared camera, an acoustic transmitter, an acoustic receiver, a radiation source, a radiation detector, an ultrasonic device, a radiographic device, a thermographic device, and an electromagnetic device.

7. The method of any preceding claim, wherein the step of providing at least one distance measuring system (330) further comprises: providing at least one of contact type collision detectors, electromagnetic transceivers, acoustic transceivers, laser transceivers, radar transceivers, visually based receivers, and RFID tag transceivers.

8. The method of any preceding claim, wherein the step of positioning the at least one remotely operated aerial platform (310) further comprises: navigating the at least one remotely operated aerial platform (310) within the interior of the wind turbine (100), where the navigating is performed substantially by a remote operator.

9. The method of any preceding claim, wherein the step of positioning the at least one remotely operated aerial platform (310) further comprises: navigating the at least one remotely operated aerial platform (310) within the interior of the wind turbine (100), where the navigating is performed substantially on a pre-programmed autonomous path.

10. The method of any preceding claim, further comprising:
providing a recharging station for the at least one remotely operated aerial platform (310) within the wind turbine (100);
wherein the at least one remotely operated aerial platform (310) returns to the recharging station to be recharged.

11. The method of any preceding claim, further comprising:
providing an inductive charging system in the recharging station; and
providing an inductive charging receiver in the at least one remotely operated aerial platform (310).

12. The method of any preceding claim, wherein the step of providing at least one remotely operated aerial platform (310) further comprises:
providing multiple remotely operated aerial platforms;
wherein each of the multiple remotely operated aerial platforms can be either remotely controlled by a human operator or controlled to navigate on a pre-programmed autonomous path to a specific area of interest.

13. The method of any preceding claim, further comprising:
providing at least one cleaning apparatus attached to the at least one remotely operated aerial platform (310); and
wherein the at least one cleaning apparatus utilizes at least one of compressed air, water, fluid, abrasive material, and grinding material.

14. The method of any preceding claim, further comprising:
providing at least one repair apparatus attached to the at least one remotely operated aerial platform (310); and
wherein the at least one repair apparatus utilizes at least one of abrasive material, grinding material, paint, adhesive, and sealing material.

15. The method of any preceding claim, further comprising:
providing a global positioning receiver to determine the relative location of the at least one remotely operated aerial platform (310);
wherein, the global positioning receiver is used to navigate the at least one remotely operated aerial platform (310) and/or maintain position of the at least one remotely operated aerial platform during flight.
